# EUROPEAN PATENT APPLICATION

(11) **EP 2 146 461 A1**
(43) Date of publication of application: **20.01.2010**
(21) Application number: 08252393.7
(22) Date of filing: 14.07.2008
(51) Int. Cl.: H04L 12/24, H04L 29/06

(54) **A method of operating a telecommunications network**

(71) Applicant: BRITISH TELECOMMUNICATIONS public limited company, London EC1A 7AJ (GB)
(72) Inventor: The designation of the inventor has not yet been filed
(74) Representative: Williamson, Simeon Paul

(57) **Abstract**

In a method of operating a data network comprising a plurality of interconnected nodes 30 each of which is operable to perform one or more services upon receiving a suitable request for a service, one or more user devices 10 connected to the network can issue requests 12, 14 for a service to be carried out by a node or nodes within the network. The method comprises: operating a virtual mechanism 50 in which a plurality of different types of elements 61, 65, 66, 67 are represented, each element obeying a set of rules associated with the respective type of the element, the respective set of rules specifying how the element behaves, wherein the probabilistic rules governing the creation, destruction and alteration of the elements are arranged to ensure that the total population of elements per node, and/or the total number of each type of element per node tends to remain below a certain settable threshold population whereby the mechanism can generally be operated without requiring elements to be dropped because of a lack of hardware processing resources, thereby maintaining the efficiency of the mechanism.

## Description

### Field of the Invention

The present invention relates to a method of operating a telecommunications network and in particular to a method of using local interactions to match system resources within the network to demand.

### Background to the Invention

As telecommunications networks grow in size, power and general complexity, keeping such a network operating in an efficient manner by human administration of the network becomes more and more difficult. For this reason, there is much ongoing research into the field of how such networks could operate autonomously, especially with regard to how to adjust the way in which the overall resources of the network are used in order to keep the network running as efficiently as possible.

In order to tackle this issue, one general approach is to assume that a network will offer users of the network various different services and that the efficiency of the network as a whole can be measured in terms of how successfully and quickly user requests for such services are satisfied by the network. Furthermore, it is assumed that the overall demand of a population of users may well vary with time in an unpredictable manner. Viewing the problem in this way has led to alternative proposals, by the present applicant, for operating a network which have been inspired by biological examples such as the manner in which colonies of bacteria adapt to changing environmental conditions.

Co-pending International Patent Application No. GB2008/001124 describes a dynamic mechanism, therein referred to as L-CID, which helps nodes in a network make good local decisions about which services they should offer. GB2008/001124 also describes a corresponding system comprising a computer network having a plurality of interconnected nodes which perform services (on demand) to users of the network. The application assumes there is a varying demand for services and that nodes can take decisions about what services to offer in an autonomous manner. By using the actual demand to perturb the dynamics of the L-CID mechanism, and by allowing the nodes to observe the current state of the L-CID mechanism, the nodes can make better choices about which services to offer.

Thus, according to GB2008/001124, there is provided a method of operating a data network comprising a plurality of interconnected nodes each of which is operable to perform one or more services upon receiving a suitable request, whereby one or more user devices connected to the network can issue task requests for a service to be carried out by a node or nodes within the network, the method comprising: operating a virtual mechanism in which a plurality of different types of elements are represented, each element obeying a set of probabilistic rules associated with the respective type of the element, the respective set of rules specifying how the element behaves (e.g. how it is created, destroyed, changed, moved and/or how it interacts with other elements etc.), wherein each element has a location property which may be correlated to one or more nodes or node locations, and analysing the virtual mechanism to determine the services to be offered by each node in the network.

However, in the system described in GB2008/001124, the present inventors have now identified a number of drawbacks which limit the effectiveness of the L-CID mechanism. In particular, over time, the number of elements existing in the mechanism tends to increase until the hardware for processing the mechanism becomes overloaded and starts operating at less than optimal efficiency.

### Summary of the Invention

According to a first aspect of the present invention, there is provided a method of operating a data network comprising a plurality of interconnected nodes each of which is operable to perform one or more services upon receiving a suitable request, whereby one or more user devices connected to the network can issue task requests for a service to be carried out by a node or nodes within the network, the method comprising: operating a virtual mechanism in which a plurality of different types of elements are represented, each element obeying a set of probabilistic rules associated with the respective type of the element, the respective set of rules specifying how the element behaves (e.g. how it is created, destroyed, changed, moved and/or how it interacts with other elements etc.), wherein each element has a location property which may be correlated to one or more nodes or node locations, and analysing the virtual mechanism to determine the services to be offered by each node in the network, and wherein the probabilistic rules governing the creation, destruction and alteration of the elements are arranged to ensure that the total population of elements per node, and/or the total number of each type of element per node tends to remain below a certain settable corresponding threshold population whereby the mechanism can generally be operated without requiring elements to be dropped because of a lack of hardware processing resources, thereby maintaining the efficiency of the mechanism.

The aspect of location is important because the idea is to enable nodes to make good local decisions; thus, in a preferred embodiment, each node has a corresponding virtual "local area" where elements can be located - and while elements are in that area, they have at least a chance of interacting with each other. Such interactions may result in elements changing state, or dying (i.e. being deleted) etc. Each node then preferably examines only it is own local "area" to determine what services it should be offering. A convenient way of implementing such an arrangement is to have each node responsible for running its portion of the distributed mechanism which is "local" to it, however, this is not strictly necessary however, in view of the virtual nature of the mechanism, it could in fact be run almost anywhere.

Analysing the virtual mechanism preferably includes determining some aspect of its current state, for example, the number of a certain type of element currently being located in its local area, etc. Preferably, for at least some of the elements, as well as belonging to a certain type which determines the set of rules used to govern its behaviour, each element also has a specificity which determines the particular type of service (offered - or offerable - by a node or nodes in the network) to which the element relates. Some such elements may be constrained by their governing set of rules to interact only with other elements of the same specificity.

Preferably, each node additionally performs actual services based on an analysis of the virtual mechanism. This may be achieved by arranging that when some types of elements interact or are created, etc. according to rules specifying the behaviour of elements, they cause a particular node (e.g. the node local to the area where interaction or creation, etc. occurred or at a Node explicitly specified within the created element, or one of the interacting elements, etc.) to carry out a particular service (preferably as identified by the specificity of the virtual element).

Preferably, the dynamic mechanism includes four different types of cells (of which, preferably, two have different activation states and, most preferably, one of these has at least two different levels of activation) and each of these four cell types has a probabilistic birth rate and a probabilistic death rate which depend to some extent on the levels of demand placed upon the system. Preferably, the birth and death rates are controlled according to probabilistic rules to ensure that as the population size of a particular type of cell grows, the ratio between the two rates decreases such that the death rate tends to exceed the birth rate.

Preferably, one of the types of cells (hereinafter referred to as antigen cells) reflects the level of demand of the users, and has a birth rate which depends upon the number of outstanding user requests for a service and the average length of time it takes for each service request to be matched to a particular node to carry out the service. By linking the birth rate with the average length of time until a request is matched to a node, rather than linking it to the average length of time for a request to be completed by a node, even if demand for a particular service becomes large such that the average length of time for completing a job increases, the mechanics of the system generally operate to ensure that a request is still quickly matched to a particular node. In this way, the population of this type of cell does not grow in an uncontrolled manner even in the event of large demand for a particular service.

Preferably, one of the types of cells (hereinafter referred to as antibody cells) is created as a burst of cells upon the double activation of another type of cell (hereinafter referred to as B cells). In this way antibody cells' birth rate depends upon the rate at which B cells are doubly activated and not upon the number of, or more significantly, the average lifespan of doubly activated B cells. This enables the average lifespan of doubly activated B cells to be quite large without risking a population explosion of antibody cells since the interaction rules of the cells are chosen such that as the rate at which B cells are doubly activated increases, the rate at which antibodies die as a result of interacting with antigen cells also tends to increase as much or more.

According to a second aspect of the present invention, there is provided a data network comprising a plurality of interconnected nodes each of which is operable to perform one or more services upon receiving a suitable request, wherein one or more user devices connected to the network are operable to issue task requests for a service to be carried out by a node or nodes within the network, the network further comprising an environment for running a virtual mechanism in which a plurality of different types of elements are represented, each element obeying a set of probabilistic rules associated with the respective type of the element, the respective set of rules specifying how the element behaves (e.g. how it is created, destroyed, changed, moved and/or how it interacts with other elements etc.); wherein each element has a location property which may be correlated to one or more nodes or node locations; wherein the network is operable to analyse the virtual mechanism to determine the services to be offered by each node in the network; and wherein the probabilistic rules governing the creation, destruction and alteration of the elements are arranged to ensure that the total population of elements per node, and/or the total number of each type of element per node tends to remain below a certain settable corresponding threshold population whereby the mechanism can generally be operated without requiring elements to be dropped because of a lack of hardware processing resources, thereby maintaining the efficiency of the mechanism.

Preferably, the environment for running the virtual mechanism is provided by the nodes themselves, in a distributed manner, in which each node runs a local portion of the overall environment, which portion has most influence over the resulting determination by the respective node of which services it should be offering. Preferably, each local environment portion includes interface means for permitting elements to be migrated from one local portion of the environment to another.

Further aspects of the present invention relate to a computer program or programs for carrying out the method of the present invention when executing on a standard computer or one or more devices forming nodes within a data network, and to carrier means, and most preferably to tangible carrier means such as a magnetic or optical storage disk or a non-volatile solid-state memory device, etc. carrying the program or programs or a device or devices programmed in accordance with the program or programs, etc.

### Inspiration

The method is inspired by the vertebrate immune system in which twin activations are needed to fully stimulate antibody production and memory. This requirement for two activating interactions acts to 'damp' the immune system so it responds with a long-term defence against genuine threats but does not over-react to every stray 'antigen'.

### Brief Description of the Drawings

In order that the present invention may be better understood, embodiments thereof will now be described, by way of example only, with reference to the accompanying drawings in which:
Figure 1 is a schematic illustration of a network according to a first embodiment of the present invention;
Figure 2 is a schematic block digram illustrating one of the nodes of the network of Figure 1 in more detail;
Figure 3 is a schematic illustration of the operation of the network operating in accordance with an embodiment of the present invention (showing only the interactions within a single node);
Figure 4 is a flowchart of the lifecycle of a Request;
Figure 5 is a state diagram illustrating how various elements of L-CID can interact with one another to cause state changes in the interacting elements leading to the creation of a job element; and
Figure 6 is a schematic illustration similar to Figure 3 but showing some interactions between two nodes.

### Detailed Description of an Embodiment

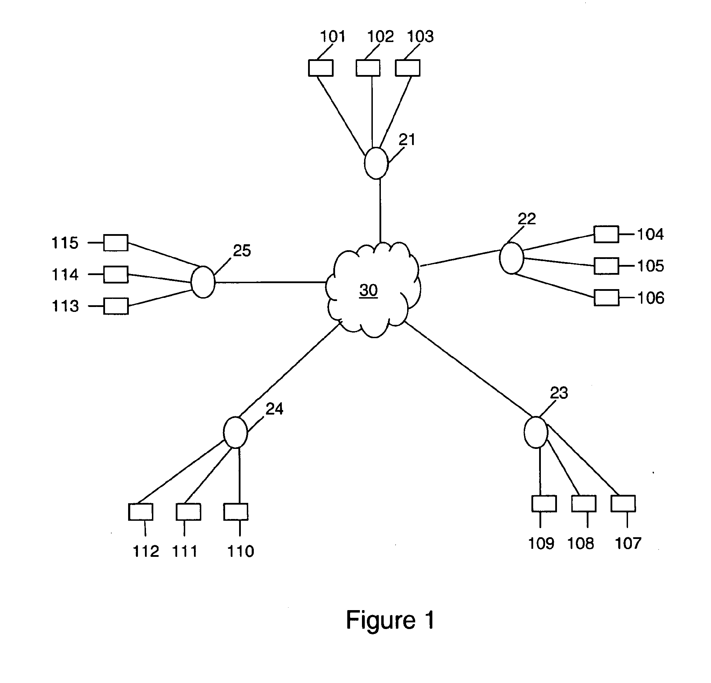

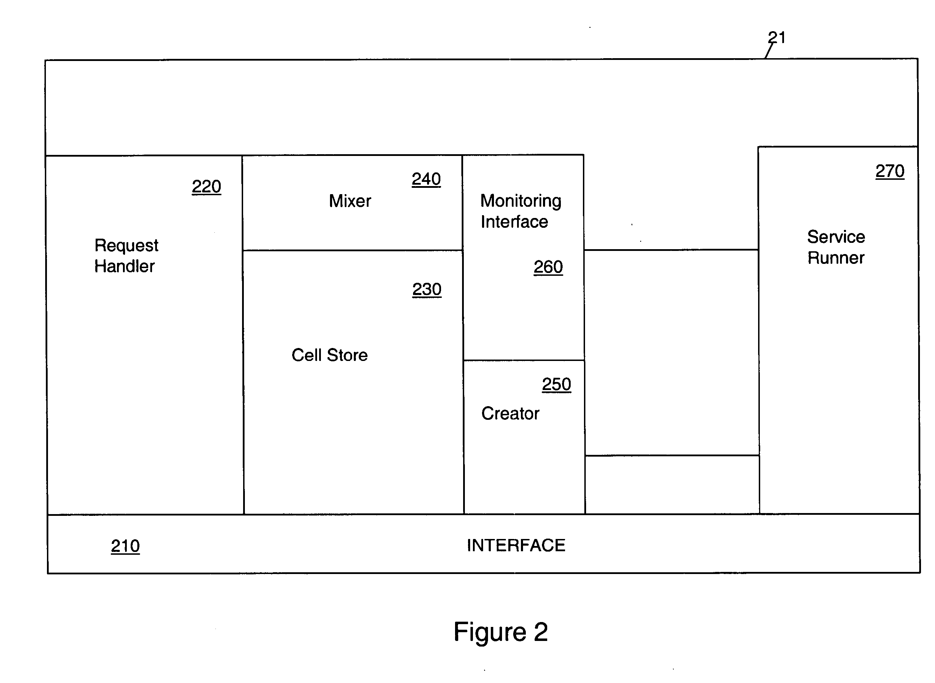

Referring to Figure 1, a network according to a first embodiment comprises a plurality of users 101-115, a plurality of service offering nodes 21-25 and an interconnecting network 30 by which any node 21-25 can communicate with any other node 21-25. Figure 2 illustrates an individual one 21 of the nodes 21-25, all of which are substantially similar to one another.

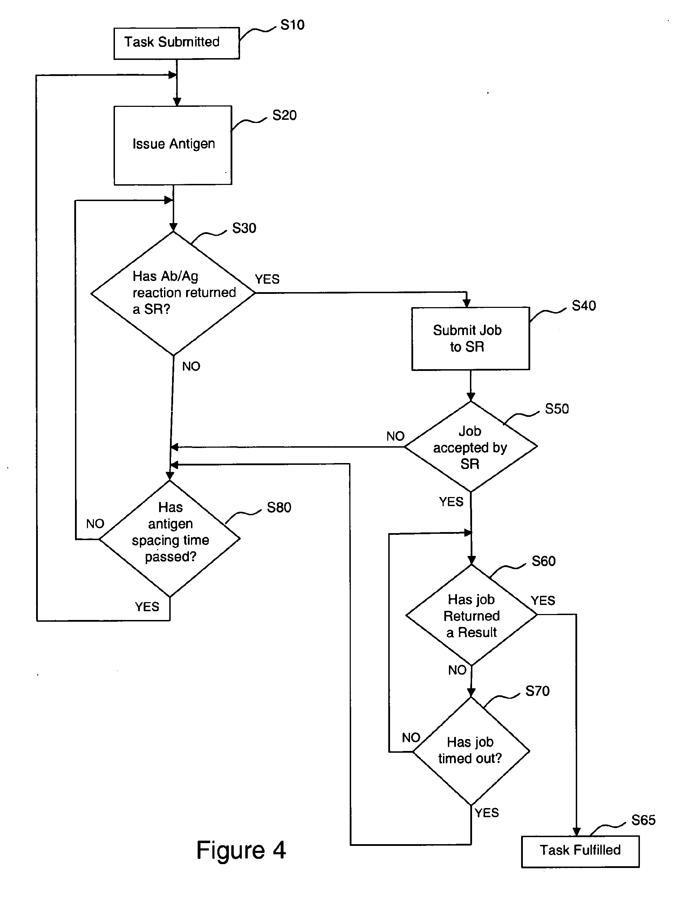

Thus, as shown in Figure 2, the node 21 comprises an interface 210 by which it can communicate via the network to any other node 22-25 as well as to the users 101,102,103 to which it is directly connected. The node 21 also includes a request handler 220 which is responsible for receiving tasks submitted by a connected user and then generating what are hereinafter referred to as user requests from each such task and generally handling each such request until the associated task submitted by a user has been successfully fulfilled by a suitable node; the various processing performed by the request handler is described below, especially with reference to Figure 4.

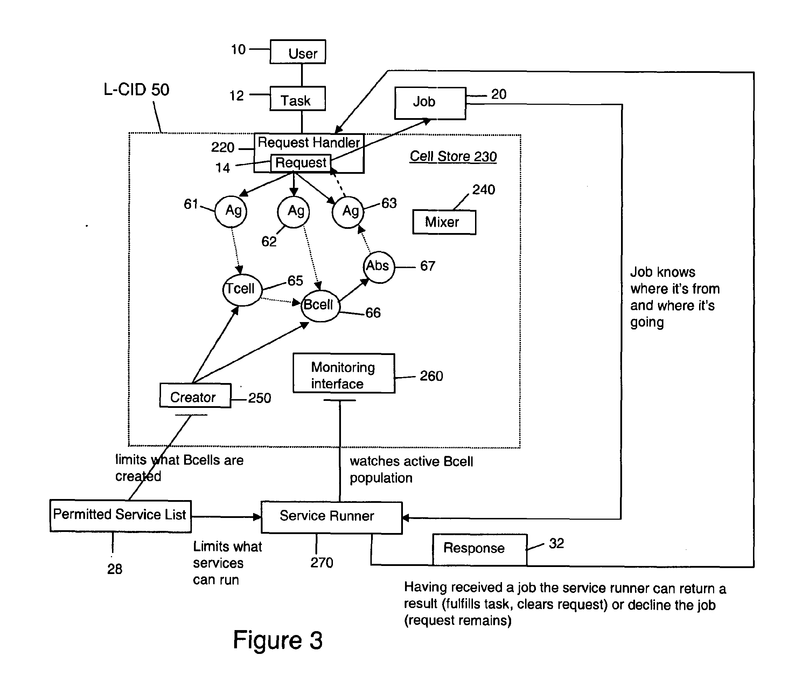

The node 21 additionally comprises a cell store 230. This is simply a data store in which information about every current cell local to node 21 is stored. The exact information stored in respect of each cell will depend on the type of the cell and is detailed below, especially with reference to Figures 1 and 3. (Note that in the present embodiment the LCID mechanism is implemented as software written in the Java programming language - as such, each node is an object (i.e. an instance of a Node class) which includes an array (in fact a type of array referred to in Java as a Vector is used) in which the cells are stored, and so this array corresponds to the cell store 230).

The node 21 additionally comprises a mixer. This is a functional module which takes two cells from the cell store and performs various processing on the cells, on a regular basis. In particular it determines for each cell whether or not it should be killed, moved to another node or divided into two similar cells. If there are still at least two different cells left after this initial processing, the mixer determines if they are such as to interact with one another (according to rules set out below) in order to alter the state of one of the remaining cells (according to the rules set out below). (Note, again, since Java is used to implement the mechanism in the present invention, the mixer function is implemented as a method of the Node class).

The node 21 additionally includes a creator 250; this module creates two types of cell hereinafter referred to as B cells which represent a service currently offered by a service runner 270 of the node 21, and T cells which can have any known specificty (i.e. it can represent any type of service which the system is designed to be able to provide - regardless of whether node 21 or indeed any other node 22-25 is currently offering such a service). (Note, again because in the present embodiment the mechanism is implemented in Java, the creator module is actually implemented, in the present embodiment, as a pair of methods of the Node class - one for creating B cells and one for creating T cells.)

The node 21 additionally includes a monitoring interface 260 which permits a service runner to observe certain properties of the LCID mechanism, in particular, it calculates and provides to the service runner 270 the relative concentrations of particular types of B cells (as described below) within the cell store 230 relative to other types of cell stored within the cell store 230. (Note, in the present embodiment, this is implemented by way of a public method of the Node Class which can therefore be called by any other class - e.g. by a service runner object. In other embodiments a text based messaging interface (e.g. an XML based messaging interface) could be used such that different technologies could be used for implementing a service runner compared to the LCID mechanism.)

Finally, the node 21 additionally includes a service runner 270 which is responsible for determining which services it will offer at any given moment in time, and for actually performing services in order to satisfy/fulfil requests (in fact however in the present embodiment the service runner does not actually process a request directly but rather a derivative therefrom called a job as is explained in greater detail below). (Also note that in the present embodiment, the service runner is also implemented as a Java class and each Node object includes an associated service runner object. However, in alternative embodiments, the service runner could be a completely separate functional module in which case the monitoring interface would need to be somewhat more than simply a public (or protected) method of the Node class.)

In the present embodiment, the LCID mechanism is implemented as software, in particular software written using the Java programming language in the form of a series of Java classes (i.e. a set of computer programs co-operating together). In this embodiment, the most basic building blocks are cells and nodes each of which is an object (i.e. an instance of a corresponding appropriate class). Each class specifies a set of data fields and methods. The data fields hold data and/or references to other objects (typically about or in respect of the particular individual object containing the data fields) while the methods specify functions which typically can be executed in respect of a particular individual object.

The details of the individual classes used to implement the present embodiment are discussed in greater detail below. Firstly, however, with reference to Figure 3, the overall operation of the system is described.

### Overview

The present embodiment is a service management mechanism operating in a distributed network services system. In the present embodiment, each node runs a local instance of LCID 50 (each of which comprises a Request handler 220, Cell Store 230, Mixer 240, Creator 250 and Monitoring Interface 260) as well as a Service Runner 270. The actions of all of these local instances of LCID mesh together to provide overall service management.

In broad overview, when a user 10 requires a service to be performed by the network, the user 10 submits a "task" 12 to its local node which passes this (via its interface 210) to its local Request Handler 220 (forming part of LCID 50). The Request Handler 220 creates "Antigen cells" 61-63 on a regular basis until the request is fulfilled. At the same time, the Creator 250 creates "T cells" 65 and "B cells" 66 on an ongoing basis. All of these cells (Antigens, T cells and B cells) are stored in the cell store 230. On a regular basis the cells contained within cell store 230 are sampled and under the control of the mixer 240 may interact according to various interaction rules discussed in detail below. Provided various interactions successfully occur in an appropriate order, it can result in a (fully activated) B cell creating "Antibody cells" (Abs 67) which in turn can interact with an Antigen cell (e.g. Ag 63) which then finally results in a job 20 being created by the request handler and forwarded to the appropriate service runner 270. Provided the service runner chooses to accept the job 20 (which it generally will do if it can), it notifies the request handler and then proceeds to carry out the service, ultimately resulting in a result which is then sent back to the Request Handler as a "Response" 32; the Request Handler then clears the Request 14 and passes the result to the User 10.

This broad overview of the lifecycle of a Request is illustrated in Figure 4. Thus at step S10 User 10 submits a Task 12 to the Request Handler 220 which generates a corresponding Request 14 which in turn causes the Request Handler to create or issue a corresponding Antigen cell (step S20). At step S30 it is determined if an Antibody and Antigen of appropriate specificity, etc (discussed in more detail below) has reacted together so as to result in a Service Runner capable of processing the User's task having been identified; if it has not, the method proceeds to step S80 described below, otherwise (i.e. if a Service Runner has been identified) the method proceeds to step S40.

In step S40 the Request Handler creates a job 20 corresponding to the Request 14 and sends this to the appropriate Service Runner (which may be on a different node to that of the Request Handler in which case the job is sent in a message passed via the Nodes Interface 210). Upon completion of step S40, the method proceeds to step S50.

In step S50 it is determined whether the Job has been received and accepted by the appropriate Service Runner (e.g. Service Runner 270). If it has not, the method proceeds to step S80 described below, otherwise the method proceeds to step S60 in which it is determined if an accepted job has been completed by the service runner and the result thereof passed back to the request handler 220. A positive determination at step S60 (i.e. the Request Handler has received a result) causes the method to flow to step S65 in which the Request Handler 220 clears the Request 14 and passes the result to the requesting User 10; this represents the end of the lifecycle of a Request 14 and consequently the method ends at this step. A negative determination at step S60, however, causes the method to flow to step S70.

At step S70, it is determined if the job has timed out - if it has not the method loops back to step S60 and thus continues to await receipt of a result from the service runner carrying out the task. If no result is received prior to reaching the time out period, then a negative determination will be made at step S70 in which case the method proceeds to step S80.

At step S80 it is determined if the antigen spacing time has passed - if not the method loops back to step S30 and awaits either an antibody antigen reaction occurring identifying a suitable service runner to carry out the task in which case the method moves from step S30 to step S40 or for the antigen spacing time to pass without such a reaction occurring in which case the method loops back from step S80 to step S20 in which a further antigen is created. This results in antigens being continually created until a service runner is identified which can carry out the task at which point a reasonable amount of time is given for the selected service runner to carry out the task, but if it doesn't do so within such time the process reverts to creating more antigens.

Note that the flowchart of Figure 4 largely reflects the behaviour of the Request Handler 220 in the present embodiment. However, a person skilled in the art will appreciate that this method may be carried out by other functional entities or hardware components (e.g. on a central computer somewhere having appropriate connections to the network, etc.) or the behaviour could be distributed between several different components, etc.

Furthermore, it will be apparent that for the antibody antigen reaction to occur, several other unmentioned processes must be occurring. These other processes are now described in greater detail below.

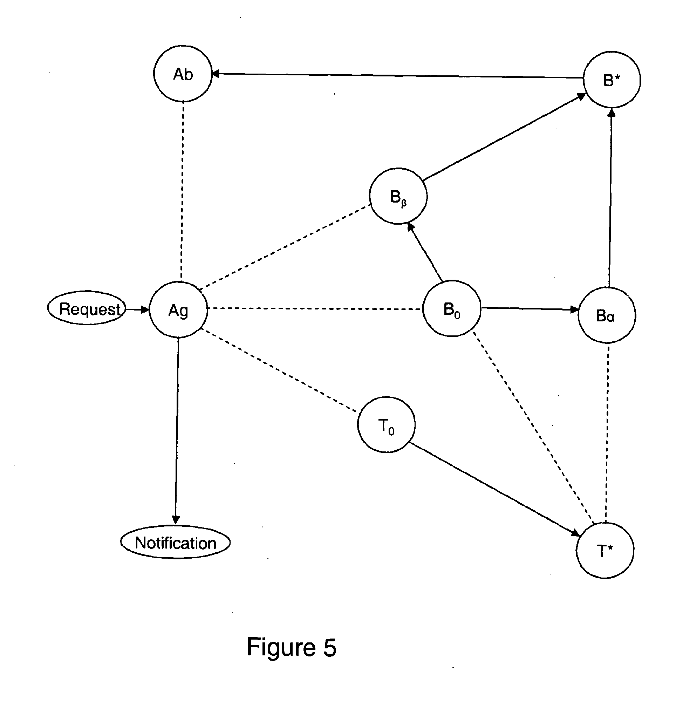

Firstly, with reference to Figure 5, there is discussed the various interactions which can occur according to the various rules used by the mixer 240. The notation used in Figure 5 is that a dotted line indicates a reaction whereas a solid line indicates a creation, in general a reaction causes the two reacting cells to be destroyed in the reaction and a new cell to be created (thus a dotted line is generally followed by a solid line) - where there is a reaction which results in a B cell or a T cell changing it's activity level, this is represented as a reaction in which the two reacting cells are destroyed (e.g. an antigen and a B₀ cell) followed by a creation of the B or T cell as appropriate in a new state (e.g. a B_{α} cell). Also note that B* is used in the figure to denote a fully activated B cell and T* is used to denote an active T cell; B₀ denotes an inactivated B cell and To denotes an inactivated T cell; B_{α} denotes an alpha activated B cell and B_{β} denotes a beta-activated B cell; Ag denotes an Antigen cell and Ab denotes an antibody cell.

From Figure 5, bearing in mind the notation used in Figure 5 as discussed above, it can be seen that:
- Requests create Antigen cells which can interact with T cells to make active T cells and with B cells to make alpha-activated B cells (the Antigen being destroyed in each case, together with the original (inactive) T or B cell).
- Antigens can also interact with beta-activated B cells to make fully-active B cells (again destroying the Antigen and the beta-activated B cells in the process).
- Active T cells can interact with alpha-activated B cells to make fully-active B cells (destroying the active T cell and the alpha-activated B cell in the process).
- Fully active B cells create Abs.
- Activated T cells can interact with (inactive) B cells to make beta-activated B cells (destroying the activated T and inactive B cells in the process).
- Antibody cells can interact with Antigen cells to create jobs (and in so doing the Antibody and Antigen cells are destroyed).

Further note that all of these interactions only occur between elements of matching specificity. Specificity as used in the present embodiment refers to a particular service either as requested by a user or as provided by a service runner of a node. In general, a creator (250) will only create B cells having a specificity corresponding to a service offered by the Service Runner (270) associated with the creator (250) such that, in general, by ensuring that the specificities must match for cells to interact with one another, a job is ultimately generated which goes to a service runner 270 capable of carrying out the associated service. However, this need not always be the case for various reasons which are discussed in greater detail below in the discussion on how a service runner selects which services to perform.

It should also be noted that once the system has been up and running for a little while, it is likely that a new request for a popular service will find an antibody fairly quickly because of previous reactions between T cells and B cells on the one hand and antigen cells from earlier requests on the other hand.

Referring now back to Figures 3 and 4, once an incoming task 12 from a user 10 has been converted into a request 14, the request handler periodically generates corresponding antigen cells 61, 62, 63. In the present embodiment such cells are produced approximately every 2500 iterations (note that in the present embodiment most things are performed on an iteration basis, an iteration being the smallest effective unit of time used by each node - note that on each iteration, a "mix" process is performed and in addition each possibility of creating a cell (e.g. by the creator 250, by the request handler in respect of each request it has and by any B cells promoted to fully active in that iteration) is considered; however the use of iterations as the smallest unit of time in this way is just done out of simplicity of design and other methods could be used - e.g. based on actual time periods as determined by a system clock, etc.).

There will typically be a pool of T cells and B cells of the appropriate specificity for the received request (as well as lots of other cells including T and B cells of different specificities, etc.). However, if we imagine for the sake of simplicity that in the system shown in Figure 3 the Request 14 is the first request received by the node and that there is only a single service offered by the service runner 270 (and contained in the permitted services list) and this service happens to correspond to the service requested by the user, then there will be a pool of unactivated B cells (e.g. B cell 66) and T cells (e.g. T cell 65) of the same specificity as the created Antigen cells 61, 62, 63. In order to create the necessary antibodies 67 to enable a job 20 to be created and sent to the service runner 270, the B cell needs to be fully activated. By referring to Figure 5, it is clear that this will require two stages of activation of the B cell 66 and there are two primary routes by which this can occur, in both routes, an antigen cell (e.g. 61) needs to activate a T cell (e.g. 65) to become an activated T cell, then either the activated T cell could activate an inactive B cell (e.g. 66) to a beta-activated B cell which in turn is then fully activated by interacting with an antigen (e.g. antigen 62) or the inactive B cell 66 could firstly be activated to an alpha-activated B cell by an antigen (e.g. antigen 62) and then the alpha-activated B cell could be fully activated by interacting with the activated T cell 65.

Once the B cell 66 has been fully activated, it creates, in the present embodiment, as a one off on the occurrence on its activation to fully active, a predetermined number of antibody cells 67 (the predetermined number being 35 in the present embodiment). Note that this arrangement of producing a finite number of antibodies immediately upon activation to fully active and not again thereafter has some significant advantages compared to an alternative possibility in which each fully active B cell has a probability of creating an antibody at each iteration - namely, the very rapid injection of a significant number of antibodies increases the chance of an appropriate antibody antigen reaction occurring and thus tends to speed up the time within which a user's task 12 eventually gets completed (although this advantage naturally applies more to dynamically changing levels of demand rather than a more steady state system); furthermore, it also removes the need to provide additional mechanisms to prevent the number of antibodies generated from growing excessively in an uncontrolled or uncapped manner. That is to say, the one off production of antibodies by a fully activated B cell itself represents an efficient capping mechanism for preventing the number of antibodies from growing beyond a desirable size relative to the number of other cells stored in the cell store 230 at any time. Trials with other mechanisms found that having fully activated B cells continuously produce antibodies tended to cause undesirably high levels of antibodies to grow, thus necessitating some kind of capping mechanism - changing the production mechanism obviates the need for an additional capping mechanism, whilst still providing good overall results.

As mentioned above, once the antibodies have been created, there is a possibility of an antibody 67 reacting with an antigen 63 to generate a notification which is passed to the request handler 220 which in turn then creates a job 20 which is then passed to the service runner 270. Any information (e.g. required input information which the service runner needs in order to carry out the service) specified in the task 12 provided by the user 10 is obtained from the request 14 and included in the Job 20 which is sent to the service runner 270.

When the service runner 270 receives the job 20 it decides either to perform the service or to refuse to perform the service. If it refuses, it sends back a response 32 informing the request handler that the job has been refused, in which case the request handler continues to wait for another antigen antibody reaction to occur resulting in a new job being sent to a service runner, etc. If the Service Runner 270 decides to perform the requested service then, in the present embodiment, it sends a response immediately to the Request Handler to inform it that it has accepted the job and indicating how long the job is likely to take. In the present embodiment this is done by indicating in a response accepting the job the amount of processing time it expects to allocate to the job each iteration. In the present embodiment, the task specifies the amount of computing time it requires to be performed and so the request handler can estimate how many iterations should be required based on this estimate for the task to be completed. In alternative embodiments the task may not include an indication of the total amount of processing time that the task will take to complete, in which case the service runner could attempt to estimate this based on some analysis of previous tasks or based on some simple heuristics in order to generate an estimate of how long the job is likely to take to process and this could be included explicitly in the response.

As is clear from Figure 4, once the job acceptance response has been received, the request handler stops generating further antigens and does not generate a new job if a notification is received unless a timeout period expires, in which case the request handler assumes that something has gone wrong - e.g. the result has got lost or corrupted in the network, the service runner has stopped running the job (either because of an error, or because of a deliberate policy decision, etc.) - and will stop waiting for the result to be returned; in such a case, the request handler again starts periodically producing antigens and if a new notification is received it does result in a new job being created (note in a preferred embodiment, any notifications received while the request handler is still waiting for an ongoing job to be completed may be stored and acted upon as soon as the timeout occurs).

### Population Control Mechanisms

This temporary suppression of antigen creation while a request handler is awaiting the result of an ongoing job for which it has received a response from a service runner indicating that the service runner has taken on the job represents another capping mechanism to prevent an undesirable expansion of the growth of antigen cells (again in trials with alternative mechanisms it was found that without this capping mechanism, antigens in some circumstances grew in numbers in an undesirable manner). In the present embodiment, the timeout is set to a value of twice the estimated time that the job will take to complete.

There are various other population control mechanisms used to control the population of cells on each node. One is a cell death mechanism by which each type of cell has an associated probability of dying. Each time a cell is selected by the mixer module 240 a test is made to see if it should be killed based on its associated probability of death. A second mechanism, which is a capping mechanism used to prevent uncapped growth of cells, is to cause the probability of the creator creating either an inactivated B cell or an inactivated T cell to be dependent upon the existing number of such T and B cells (this could be either regardless of the specificity of the cells or the probabilities of the creation of each type of cell could depend to an extent on the current population at the node of that particular specificity of B or T). By keeping the death rate constant but varying the birth rate in this way, population levels can be controlled such as to have at least a tendency to remain within certain limits.

In the present embodiment, each cell type has its own capping mechanism or, most preferably, a plurality of capping mechanisms to enable an administrator of the system to fine tune the system in such a way as to ensure that over a wide range of demand levels there is no tendency for any cell type to grow beyond a certain threshold population level such that the system can be maintained generally in a state such that no cells need be "dropped" as a result of running out of storage space.

In general, once a relatively stable population has been established, it is desirable for each cell type to have a birth rate and a death rate which are approximately equal. It is also desirable if mechanisms can be provided which permit the birth rate to be slightly greater than the death rate (e.g. by decreasing the death rate, or increasing the birth rate or both or by decreasing the death rate by more than the birth rate or increasing the birth rate by more than the death rate) where the population of a particular cell type decreases and vice versa where it increases.

However, the desirable stable population level for any particular cell type should vary depending upon the demand for any particular service at any one time, and so again the birth and death rates should be able to be modified depending on the demand for a particular service. It can be seen that the present embodiment achieves all of these aims with the various birth and death mechanisms which it employs, but it will be appreciated by the skilled reader that other mechanisms to those actually employed in the present embodiment could also be used to achieve the same aims.

For example, one of the mechanisms employed in the present invention is to randomly select two cells from the cell store at each iteration and to test the two selected cells to see if either or both is to be killed by comparing a pseudo random number with a cell death probability number in respect of each selected cell. The probability of a particular type of cell dying at each iteration, therefore depends upon two factors, namely the probability of a cell of that particular type being selected and the cell death probability number for that type of cell. The first factor depends on the relative population size of cells of that type, relative to the total population size (of all cell types), and therefore tends to prevent any one type of cell becoming much more numerous than other cell types, but it has no impact on the overall population size.

Therefore, some mechanism for either increasing the death rate either on a type of cell basis or generally across all cells or reducing the birth rate (at least on a relative basis) in dependence on general or absolute population levels is required. In the present embodiment, the creator (which creates B and T cells) includes such a mechanism in that the birth rate is explicitly reduced in dependence upon the absolute number of such cells in the population (the greater the absolute number, the lower the birth rate).

The rate at which antigens are created depends in the present embodiment on two factors - the first is the level of demand, since new antigens are produced in respect of outstanding requests from users - the higher the user demand, the more such requests there will tend to be at any one time and so the greater the number of such antigens being produced. However, in addition to this factor, in the present invention when a job has been accepted, further creation of antigens in respect of that job/request is stopped for at least the expected duration of the job. Since the duration of the job depends upon the level of demand (the greater the demand, the longer each job takes because the network is busy and so spreads its resources more thinly amongst all of the ongoing jobs) this results in the birth rate of antigens decreasing on average where there is large demand and this also therefore acts to stabilise the population of antigens.

Finally, in respect of antibodies, these are produced, in the present embodiment, as a batch in a one off manner by a fully activated B cell. Since the creation of fully activated B cells is constrained by the rate of creation of antigen cells, the constraint on the creation of new antigen cells discussed above also constrains the maximum rate of creation of antibody cells, given that they are created only as a one off event on the "creation" of a fully active B cell. Therefore the one off batch creation of antibodies per fully activated B cell also constitutes a capping mechanism in the present embodiment to prevent antibody cells from growing in population size in an uncontrolled manner.

### Die, Diffuse, Divide

Each element/cell is assigned three probabilities with values determined in accordance with the cell type (and activation status for T cells and B cells). As mentioned above, in the present embodiment, as part of the mix function which is performed on each node on each iteration, two cells are selected and each is tested to see if it dies; this is done by testing it against it's designated death probability. In a similar manner, a similar test is done in respect of each cell (which survives the death test - i.e. if the death test is not met) firstly to see if it should diffuse according to its designated diffusion probability and secondly (if it does not diffuse) to see if it divides. In each case, in the present embodiment, the same mechanism is used, namely a pseudo-random generator provided by the device on which the node is running is used to generate a pseudo-random number within the range of 0 to 1 and this is then compared with the respective designated probability - if the pseudo-random number is equal to or below the probability then the test is said to have been met and the cell either dies, diffuses or divides as appropriate, otherwise if the test is not met no action is taken and the next test is performed. If a test is met then the appropriate action is taken for that cell and no further tests or mixing is carried out in respect of that cell in that iteration, although, if it is the first of the two cells to be tested, then the second selected cell is also tested in the present embodiment to see if it should die, diffuse or divide. In the present embodiment, only if none of the tests is met (for both selected elements) is a determination made as to whether or not the cells could react according to the rules set out in Figure 5.

In the present embodiment the tests are carried out in the order cell 1 - die, diffuse, divide; cell 2 - die, diffuse, divide and the various values assigned to the die, diffuse and divide probabilities for each cell type are as set out in the table below:

| | **p(Die)** | **p(Divide)** | **p(Diffuse)** |
|---|---|---|---|
| **Ab** | 0.2 | 0 | 0.6 |
| **Ag** | 0.01 | 0 | 0.4 |
| **B(0)** | 0.01 | 0.002 | 0.0002 |
| **B(alpha)** | 0.0015 | 0.0015 | 0.0002 |
| **B(beta)** | 0.001 | 0.002 | 0.0002 |
| **B*** | 0.006 | 0.004 | 0.0005 |
| **T(0)** | 0.04 | 0.002 | 0.02 |
| **T*** | 0.04 | 0.004 | 0.2 |

From the above table it can be seen that in general the probabilities are fairly low (e.g. 1% or less). The exceptions are Antibodies which have a 20% death probability and a 60% diffusion probability (note this tends to encourage antibodies to be relatively short-lived elements with a high tendency to migrate to neighbouring nodes); Antigens have a fairly high diffusion probability at 40% (which also tends to cause Antigens to migrate around the network); B cells have fairly low probabilities for everything in all activation states, the greatest probability being that of dying for a completely non-activated B cell which is set at 1%; finally, T cells (both activated and non-activated) have a 4% death probability and activated T cells have a 20% probability of diffusing. Note all of these parameters can be easily adjusted by a system administrator in order to arrive at suitable values to obtain good results on the particular system on which the mechanism is running.

Thus, one can see from the above probabilities that, broadly speaking, of the 4 types of interacting element in L-CID called 'Ag' 'Ab' 'Tcell' and 'Bcell' (although the T cells have two different activation states and the B cells have 4 different activation states), one can consider that the Ags represent requests, the Tcells are the quick to respond elements which can spread word of new demand through the network, Bcells take longer to get going but they are the effectors which influence service provision and Abs act like 'offers' - telling Ags where to go to get their request fulfilled.

Ag - the antigen cells are L-CID tokens for user requests. An unfulfilled request generates Ags at a certain rate (unless a job is currently being acted upon). The Ag includes a pointer to the originating user and a 'specificity' (the type of service requested). They are able to move from node to node (with a diffuse probability of 40%).

Ab - Antibody cells are L-CID pointers to a running service (NB they are really tokens of a fully active Bcell which, in general, equates to a running service). The Ab includes a pointer to the node which was running the service at the time the Ab was created. It also has a specificity (details of the type of job which the service in question can fulfil). They are able to move from node to node.

Tcell - have two states and a specificity. Change state from inactive to active when they encounter an Ag which matches their specificity. They are able to move from node to node.

Bcell - have four states and a specificity. Encountering an Ag which matches their specificity changes them from inactive to alpha or from beta to fully active. Encountering an active Tcell which matches their specificity changes them from inactive to beta or from alpha to fully active. When fully active they influence the local service runner to offer the service corresponding to their specificity. This also triggers creation of Abs. Note that in the present invention the AB's specify the service runner of the node on which the B cell was located when it became fully active - since B cells only rarely migrate, this is most likely to be the node on which the B cell was created - however this need not always be the case. In an alternative embodiment, the Abs could refer to the service runner at the node where the B cell was created regardless of whether or not the B cell has migrated since it was first created.

When an Ag encounters an Ab of matching specificity both are destroyed. The information from the Ab about which node was providing the service is passed to the Request that originated the Ag. It is then possible for the Request to attempt fulfilment by sending a Job to the node in question. If successful, the Request will be fulfilled and will clear from the system (so no further Ag will be generated by that Request). If unsuccessful the request is still there and can continue to generate Ag and respond to Ag-Ab pairings. See figure 2.

### What Is The Advantage of Service Management?

Service Management means the process by which a node decides (or is told) which services it will offer from the set of all possible services. In many cases it is more efficient for a node to specialise in a small number of services than to spread itself across a very wide set of services. That is to say a node offering only service A would process requests for that service more than twice as quickly (or, in the same time, it would process more than twice the number of requests) as an otherwise identical node which uses 50% of its resources offering service A and 50% offering service B.

It is also often the case that there would be some advantage in reducing the distance (either in the overlay network where an overlay network sits on top of an underlying network such as Internet Protocol or actual physical distance, or both) between the request and the node fulfilling that job. This could be because there is some explicit cost (in time or other units) associated with each 'hop' taken by the request going out and the fulfilled response coming back. Or it could be that the chance of a job failing increases as the distance increases, perhaps because the node moves within the overlay network and can no longer be found or because it has ceased running the correct service type for the job in question.

In addition, in some circumstances, a node may incur penalties when it changes the service(s) it offers (time, memory or processor power may be used setting up a new service). So it can be more efficient to keep providing a particular service even if there is a short-lived drop in demand for that service.

L-CID does not necessarily have to be told what the costs or efficiencies of a particular situation are. L-CID will tend to lead the system towards a distribution of services which deals most rapidly with demand. So if inefficiencies cause time delays the system will tend to reduce them where possible (by favouring a more efficient (quicker) service provision).

If the costs are not inherently manifested by time delay, they must be represented in some other way to L-CID. This could be by translating them into an artificially-introduced delay (i.e. if making a one-hop link costs 100 currency units, then introduce a 100 time unit delay to communications on that link).

### Test Scenario

For system testing and validation purposes a version of the above described embodiment has been implemented and tested within a computer simulation of a network and set of users and this is now described below. In the computer simulation, a network of 10 nodes (numbered 0 to 9) are interconnected such that each node is connected to nodes with numbers +1 or -1 its own. i.e. node 5 is connected to nodes 4 and 6. Node 0 is only connected to node 1. Node 9 is only connected to node 8.

Each of these (simulated) nodes has:
- a certain processing capacity;
- a list of services which it is able in principle to provide; and
- a set of users who periodically on a pseudo-random basis make demands for services.

In describing the computer simulation, the following terminology is used:
- node - a simulation of a processing unit connected to neighbouring nodes and a set of users;
- users - sources of demand outside the control of L-CID;
- service - a particular processing function e.g. summing two numbers;
- service list - each node has a service list which contains the set of services which that node is able to offer;
- service runner - each node has a service runner which maintains a list of the set of services currently being offered by that node, and deals with incoming jobs - in particular in the simulation, it has a number of processing steps which it can "perform" each iteration (specifically in this simulation each service runner has a maximum capability of 50 processing steps per iteration which is reduced if the service runner has to split its resources between different jobs and even more if it is splitting the resources between different jobs of different service types);
- task - a demand from a user for an instance of a service to be performed (which in a real environment would supply the data to be processed e.g. 'SUM, 3, 4' - but which in the test simulation simply specifies a number of processing steps required to be carried out by a service runner to complete the task);
- request - when L-CID gets a task from a user it creates a request, which remains in the system until the task is fulfilled. A request has the same information as a task plus the identity of the user who submitted the task (e.g. again in a real environment this would be 'User A, SUM, 3, 4', but in the simulation it just specifies the User (e.g. User A) together with the number of processing steps required to perform the task);
- job - an instance of a service to be performed at a particular node's service runner - a job is created when an Ag meets an Ab - a job has the same information as a request plus the address of the node which (hopefully) will perform the service (e.g. 'Node X, User A, NoOfProcessingSteps');
- fulfilment - a request is made, a job is run and a processed result returned to the user (e.g. in a real environment the number 7 is returned to the user who requested 'SUM, 3, 4' - in the simulation a message is simply returned indicating that the job has now been completed once the service runner has allocated sufficient processing steps to the job to complete it according to the NoOfProcessingSteps specified in the received job);
- failure - a job is initiated but the result does not return to the user
- specificity - every cell/element in L-CID has a specificity and will only interact with other cells/elements of the same specificity. In a preferred embodiment this relates directly to the different types of service (so a task requiring service SUM would result in a L-CID request with specificity SUM (or whatever the chosen system identifier for that service is), resulting in synthesis of Ags with specificity SUM. And the eventual fulfilment of that task depends on interactions among those Ags and Tcells, Bcells and Abs all of specificty SUM to create a job of specificity SUM.

Each node has a single user attached. All users generate demand according to the same function for all users in any given simulation run. The function specifies the probability that a new request for a service type will be created in the current timestep (i.e. iteration). So for example, for a single simulation run the probability of a request for service A could be set to 0.01. That would mean that in every timestep, on every node, there is a 1 % chance of a new request for service A being delivered to its connected node.

### What is included in L-CID and what is outside?

In the simulation, there are various components of the simulation which are not part of the LCID mechanism in the sense that in a real embodiment these components would be external to the LCID mechanism. The following discussion highlights this issue by pointing out what is a part of LCID and what is not. With reference to Figure 3, the L-CID mechanism is represented by the box indicated by reference numeral 50 - generally, elements 220, 14, 230, 240, 250, 260, 61-63 and 65-67 within the L-CID box 50 are part of the L-CID mechanism whereas the elements 10, 12, 28, 270 and 32 which are outside the L-CID box 50 are not part of L-CID; the exception is that a job 20 is part of L-CID but must also exist outside of L-CID in order to be carried out - this is explained in greater detail below.

Users 10 are NOT L-CID. They do not care about L-CID mechanisms or the existence of a network of nodes. They want various tasks to be fulfilled. For example a user 10 might have a set of pairs of numbers and wants each pair summed. Such a user would create a task 12 for each pair and feed these tasks in at the local access point.

Tasks 12 are NOT L-CID. They are created by users.

Requests 14 ARE L-CID. L-CID (and in particular the request handler 220) parses tasks 12 to produce requests 14. In the present embodiment, a very direct 'parsing' is used which simply requires that the request 14 holds the identity of the user 10 (so that results can be returned to the right user) and the content of the task 12 (the process to be performed and the data to be processed).

The request handler 220 generates Ag cells 61, 62, 63 in respect of each request 14 which it is handling and these Ag cells interact with Tcells 65, Bcells 66 and Ab's 67. All of these elements are part of L-CID and the interactions among these elements are a key part of the L-CID mechanism of the present embodiment.

The request handler 220 receives a response or result 32 in respect of a particular request returned by a service runner 30 in response to a Job 20. If fulfilled the request 14 terminates. If not fulfilled (because, for example, the service runner has rejected the Job) the request 14 remains and the request handler continues to create or resumes creation of Ags 61, 62, 63. The response 32 is not really part of LCID although it is sent to the request handler 220 which is part of LCID and it is used to control the generation of Ag's which is part of LCID. However, when a result is sent as the response 32, the request handler simply notes its arrival in order to terminate the request 14 and then passes the result to the user 10.

Various rules for Ag 61,62,63 creation by the Request 14 can be used; for example, a simple constant rate of production which ceases when the Request terminates. Another example could be: an initial burst of Ag creation followed by a constant rate of production. In both cases it is preferred if creation is suspended for a time after a Job 20 is despatched and resumed after a period if there is no response to the Job 20 as is done in the present embodiment.

When Ags 61,62,63 encounter Abs 67 of matching specificity a Job 20 is created. Jobs 20 are considered to be part of the L-CID mechanism. They get the address of a node from the Ab 67 and the identity of a user 10, the service required and the data to be processed from the Ag/Request 61,62,63/14.

This job 20 then leaves the L-CID system 50 and is routed to the destination node (which may be the local node whose mixer 240 is running this L-CID mixing area or may be a remote node somewhere else in the network) by whatever communication protocol is used in the network.

The Service Runner 30 is not considered part of the L-CID mechanism 50. This is the part of the node which runs currently active services and deals with incoming jobs. When a new job arrives the service runner 30 can accept it or reject it. If and when it completes a job it returns the result to the point of origin (i.e. the requesting request handler) using whatever network communication protocols are in force.

The Service Runner 30 also encapsulates some decision-making function, allowing it to autonomously decide to deactivate existing services and activate new ones. This is done with reference to two other components:
- the Permitted Services List 28, which is a 'white list' of all the services which the Service runner 30 at that node could choose to run. It is possible that entries in this list could have weightings or other information which would affect the circumstances under which the Service Runner would activate / deactivate those services. It is envisaged that all nodes would generally have the same services on their permitted services list and that this would be updated from time to time as new services are added, and/or old ones are removed, etc. However, the system is robust enough to deal with cases where different nodes contain different permitted services lists with different permitted services being included.
- The Monitoring Interface 260, which is part of L-CID and is designed to display the internal dynamics of L-CID to non-L-CID observers. The monitoring Interface could faithfully display exact active Bcell numbers or it could apply its own threshold (e.g. it would not inform the Service Runner of the existence of active Bcells of a particular specificity until they represented more than 5% of the active Bcell population).

It should be clear, then, that the Service Runner 270 may advantageously use L-CID as one of the factors influencing its decision-making. Of course, since the service runner 270 is not strictly speaking part of the L-CID mechanism the service runner can in fact operate in any way in which it chooses. However, since one of the two main aims of the L-CID mechanism is to improve service performance by helping nodes to select an efficient set of services to offer (the other main aim being to help user tasks find an appropriate service runner on which to have the service performed) it is generally preferred if the service runner does include a mechanism for receiving from and processing information provided by the monitoring interface in order to help it choose which services to offer (and how greatly to advertise the respective services it is offering by controlling the rates at which B cells of differing specificities are created by the creator). It is generally preferable if the service runner acts in accordance with externally-set policies which are outside the control of L-CID but which use the information fed back from L-CID in order to achieve the aims of the externally set policies.

For example, the external policies could relate to high level system requirements and service level agreements (e.g. it might be a requirement of the system that every node is always running service X regardless of demand. In such a case the level of active Bcells of specificity X would be irrelevant to the service runner 30. The monitoring interface could faithfully report the presence or absence of such cells but the service runner 30 would keep running service X anyway and keep offering the service by generating B cells of specificity X). And we imagine that the internal L-CID policies could advantageously in some circumstances relate to tuning the system to give effective dynamics (e.g. deciding that active Bcell numbers at less than 5% of the total Bcell population should not be reported because this is 'noise').

However it would be quite possible to use L-CID Monitoring Interface policies to exert gross control rather than tuning (e.g. by never reporting the level of active Bcells of specificity Y).

The Creator 250 is part of L-CID and makes new Tcells 65 and Bcells 66 of random specificity. Preferably, the T cells are created with random specificty with a uniform distribution across all services known to the node (i.e. contained in the permitted services list 28), whereas the specificity of Bcells is selected according to a distribution which is more complex and preferably is controlled at least to some extent by the service runner and any externally set policies. Thus, in every time-step there is a probability of creating a Tcell 65, and if one is created, then, in the present embodiment, it will be of random specificity chosen with a uniform distribution across the full range of specificities.

There is also a probability of the creator 250 creating a Bcell 66 at each timestep or iteration, and, if one is created, then, in the simulation, it is simulated as if there is a set of specificities which the respective node must continue to provide and advertise regardless of demand and so if any of these specificities is detected as having less than a certain number of B cells present on the node at any one time, then a B cell of this specificity is created, or, if there is more than one such specificity whose B cell population is below this limit, then a B cell of any such specificity is chosen pseudo-randomly with uniform distribution. However, if there are no such specificities whose B cell population has fallen below the minimum threshold amount, then, in the present embodiment, a new B cell is created with a specificity chosen according to a probability distribution which reflects the relative proportions of the specificities of all of the fully active B cells existing in the node's cell store (i.e. if there are twice as many fully active B cells of specificity X compared to the number of fully active B cells of specificity Y, then if a new B cell is to be created, then it is twice as likely to be a B cell of specificty X as of specificity Y).

One possible way of implementing such functionality would be to include a list of offered services which is maintained by the service runner. Each service listed in the list could have various properties or parameters which could be regularly updated by the service runner based on policy considerations and/or information provided by the Monitoring Interface; for example, it could simply specify whether or not a service is currently being provided by the service runner (so that services can be easily switched on and switched off by simply changing the value of this parameter - rather than having to delete and/or re-add whole lines in the list, etc.) and the minimum desired number of B cells for each service (provided it is being offered). This information is then sufficient, provided the creator 250 is able to determine directly the numbers of B cells of each specificity stored in the cell store 230 as is the case with the present embodiment, to enable the creator to operate in the manner described above.

Additionally, the service runner can mandate, for example in order to comply with some externally set policy, that the creator either must or must not create a B cell of a particular specificity - possibly in dependence upon the actual number of B cells of that specificity found in the cell store at each iteration, etc. - or can mandate that a particular probability distribution should be used, etc. These and similar possibilities could all easily be implemented using a local offered services list with various parameters which could either be ones requiring the creator to access current figures concerning the numbers of different types of cells stored in the cell store 230, or this work could be carried out by the service runner such that the creator did not need to look this information up in order to determine the rules to be used in creating B cells.

The Mixer 240 is part of L-CID and causes interactions to take place by selecting L-CID elements and applying the interaction rules. In the present embodiment this is done by choosing two elements at random. In most cases the specificities do not match so most pairings do not result in interactions. Alternative ways of choosing elements could be used which preserve the probabilistic nature of encounters but may be more efficient. For example, instead of selecting just two cells at each iteration, groups of three or more cells could be selected, and all possible pairs could be investigated to see if a reaction should occur or not, etc.

The Monitoring Interface 260 is a 'window' into the internal state of the L-CID mechanism 50. At its simplest it could be a list of the numbers of active B cells of each specificity. The service runner 270 observes L-CID state via this monitoring interface 260. As noted above, this monitoring interface is an opportunity for L-CID to 'distort' the portrayal of its internal state, if that is deemed beneficial.

Note that the Permitted Service List 28 (which is not part of L-CID) is used in the present embodiment to limit the set of services available to the service runner 30 (the node cannot offer services not in its list) and limits the creation of Bcells and Tcells (L-CID at this node will not create any T cells for services which the local node cannot offer). Additionally, an offered services list in the present embodiment also limits the creation of B cells, but not of T cells, furthermore, if a minimum No of B cells parameter is set to a number greater than zero for a particular service, then this list ensures that the number of B cells generated for that service tends to stay at or above this minimum level regardless of the demand for such a service.

To be clear it must be understood that every node has a permitted services list which places limits only on that local node so for example in a network offering a full alphabet (A-Z) of services the Permitted Services List at one node might be 'A,B,C' meaning that L-CID at that node can only create Bcells (and in a preferred embodiment Tcells) of specificity A, B or C. Another node in the same network could have the Permitted Services List 'X,Y,Z' and would only be able to create Bcells (and in preferred embodiment Tcells) of specificity X, Y or Z. However, it is generally preferred if the permitted services list is generally similar for all nodes throughout the network, but specialisation of nodes is achieved by allowing individual service nodes to vary their offered services list.

### A Network of Nodes

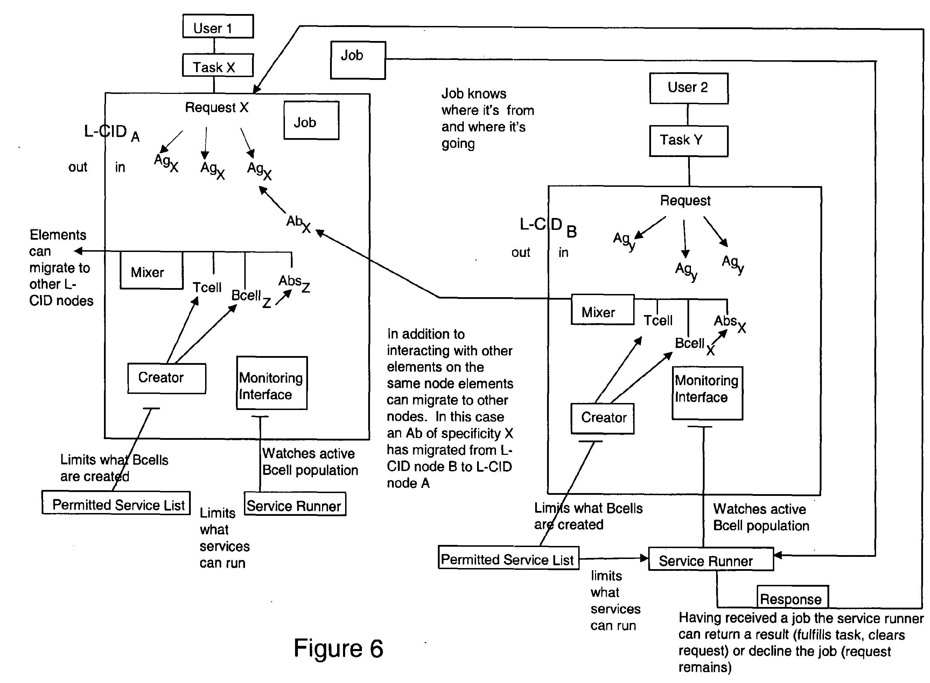

It is important to remember that the L-CID mechanism is intended to function in a network of connected nodes. Figure 6 shows how requests generated at L-CID node A can be fulfilled by the service runner at L-CID node B. User 1 demands Task X. This generates a Request X at L-CID node A.
The service which can fulfil the Request X may not be running at node A (it may not even be in the permitted service list for node A).

Elements can migrate from one node to another by 'Diffusion' (see above).
In the situation shown in figure 4 an Ab of specificity X has diffused from node B to node A.
Once on node A the Ab specificity X can interact with the Ag specificity X to create a Job. Thanks to the origin information carried by the Ab, the Job knows which node it should go to.
When the job reaches the node it requests the appropriate service and the service runner at node B responds.

### Discussion

The LCID mechanism enables a network operator to provide a system which generates its own internal dynamics using demand from users as the main input. Although the internal workings of L-CID seem complicated, the aim is simply to provide an output via the monitoring interface which can be used to influence service provision together with a mechanism for helping user requests to be sent to an appropriate node at which the requested service can be carried out.

So, crudely, Ags of a certain specificity are created by demands of that specificity. At any time the number of fully active Bcells of a given specificity will influence the services running on the node.

The internal dynamics are somewhat complicated to prevent the numbers of active Bcells (and hence running services) to follow every transient peak and trough of local and remote demand. Particularly important in this respect is the double activation idea (i.e. B cells need to be activated twice to become fully active - in the present embodiment, once from an activated T cell and once from an Antigen (which can however happen in either possible order); this double activation feature is inspired from the mammalian adaptive immune system.

However, this complexity of the internal dynamics can cause problems. The main problems detected by the present inventors have been associated with uncontrolled population growth of certain cells. The main improvements made by the present inventors and reflected in the present embodiment are associated with preventing such uncapped growth. In particular, the provision of mechanisms specific to each type of cell to enable an administrator to fine tune the capping mechanisms on a cell-type by cell-type basis, as well as the general use of capping mechanisms which tend to increase the death-rate to birth-rate ratio of cells (again preferably on a cell-type by cell-type basis) as the population (of a particular cell-type) increases and in particular, ensuring that such mechanisms apply to all cell types to avoid certain types of cell (e.g. Antibodies or Antigens) from growing without limit.

### Variations

As a variation of the above embodiments, each cell could include a timestamp indicating the time at which it was created and each cell type's death probability could vary in dependence upon the current age of the cell as determined by subtracting the birth time of the cell with the current time. In this way, older cells could be given a higher death probability than younger cells.

### Adequate Complexity

A distributed system based on an activation sequence of different elements can be constructed under a range of different conditions, which might represent either inadequate or excessive complexity for the application required. In order to test whether the above-described preferred embodiment has adequate complexity for a distributed network of service providing nodes, a simulation of a second embodiment was performed in which only a single level of activation was required. In this alternative embodiment, T cells are excluded altogether and instead of each creator creating completely inactive B cells, each creator instead creates beta activated B cells which therefore only need to interact with an antigen cell to immediately create a fully activated B cell. In the simulation, this embodiment was found to react slightly faster to new requests but but to exhibit worse fault tolerance because the benefit of T cells spreading knowledge about which nodes are performing which services was lost.

## Claims

1. A method of operating a data network comprising a plurality of interconnected nodes each of which is operable to perform one or more services upon receiving a suitable request, whereby one or more user devices connected to the network can issue task requests for a service to be carried out by a node or nodes within the network, the method comprising: operating a virtual mechanism in which a plurality of different types of elements are represented, each element obeying a set of probabilistic rules associated with the respective type of the element, the respective set of rules specifying how the element behaves wherein the probabilistic rules governing the creation, destruction and alteration of the elements are arranged to ensure that the total population of elements per node, and/or the total number of each type of element per node tends to remain below a certain settable threshold population whereby the mechanism can generally be operated without requiring elements to be dropped because of a lack of hardware processing resources, thereby maintaining the efficiency of the mechanism.

2. A method according to claim 1 wherein the virtual mechanism has a plurality of virtual locations at which an element may be located, and wherein each virtual location is associated with a node or nodes, and each node determines which services to offer based on an analysis of the elements within the virtual location or locations associated with the respective node.

3. A method according to claim 2 wherein the virtual mechanism is run in a distributed manner by the nodes, each node running an environment for hosting a virtual location local to it.

4. A method according to any preceding claim wherein the selection of individual service requests to fulfil is additionally based on an analysis of the virtual mechanism.

5. A method according to any preceding claim in which the probabilistic rules result in each type of element having an associated birth rate and death rate and wherein the rules are set such that as the population size of each particular type of element increases, the ratio of the death rate to birth rate increases.

6. A method according to any one of the preceding claims wherein one of the types of elements reflects the level of demand of the users, and has a birth rate which depends upon the number of outstanding user requests for a service and the average length of time it takes for each service request to be matched to a particular node to carry out the service.

7. A method according to any preceding claim wherein one of the types of elements is created as a one-off burst of elements upon the activation of another type of element.

8. A data network comprising a plurality of interconnected nodes each of which is operable to perform one or more services upon receiving a suitable request originating from a user device connected to the network, the network further comprising an environment for running a virtual mechanism in which a plurality of different types of elements are represented, each element obeying a set of probabilistic rules associated with the respective type of the element, the respective set of rules specifying how the element behaves, wherein the probabilistic rules governing the creation, destruction and alteration of the elements are arranged to ensure that the total population of elements per node, and/or the total number of each type of element per node tends to remain below a certain settable threshold population whereby the mechanism can generally be operated without requiring elements to be dropped because of a lack of hardware processing resources, thereby maintaining the efficiency of the mechanism, and wherein the network further includes a virtual mechanism analyser for analysing the virtual mechanism and determining, based on the analysis, the services to be offered by each node in the network.

9. A computer program or suite of programs for causing the method of any one of claims 1 to 7 to be carried out during execution of the program or programs.

10. Carrier means carrying the program or programs of claim 9.
